Europäisches Patentamt

European Patent Office

Office européen des brevets

(19)

(11) Veröffentlichungsnummer : **0 011 871**
**B1**

(12) **EUROPÄISCHE PATENTSCHRIFT**

(45) Veröffentlichungstag der Patentschrift :
07.04.82

(51) Int. Cl.³ : **G 01 L 7/06, G 01 D 5/04**

(21) Anmeldenummer : 79104793.9

(22) Anmeldetag : 30.11.79

(54) **Pneumatisches Messwerk.**

(30) Priorität : 30.11.78 DE 2851866

(43) Veröffentlichungstag der Anmeldung :
11.06.80 (Patentblatt 80/12)

(45) Bekanntmachung des Hinweises auf die Patenterteilung : 07.04.82 Patentblatt 82/14

(84) Benannte Vertragsstaaten :
AT BE CH FR GB NL

(56) Entgegenhaltungen :
DE - A - 2 714 550
FR - A - 2 340 544

(73) Patentinhaber : SIEMENS AKTIENGESELLSCHAFT
Postfach 22 02 61
D-8000 München 22 (DE)

(72) Erfinder : Bauersachs, Otto, Dipl.-Ing.
Breslauer Strasse 66 H
D-7500 Karlsruhe (DE)
Erfinder : Schukat, Horst
Ebersteinstrasse 43
D-7512 Rheinstetten (DE)

Imprimerie Jouve, 18, rue St-Denis, 75001 Paris, France

## Pneumatisches Meßwerk

Die Erfindung bezieht sich auf ein pneumatisches Meßwerk mit einem meßdruckbeaufschlagten Faltenbalg, dessen Hub mittels einer Schubstange auf den kürzeren Arm eines an seinem Scheitel drehbeweglich gelagerten Winkelhebels übertragen wird, dessen längerer Arm an seinem Ende über eine gabelartige Führung an einen auf einer geraden Gleitschiene über eine gerade, ebene Skale bewegbaren Zeigerschlitten angekoppelt ist.

Bei derartigen Meßwerken wirkt ein der Meßgröße proportionaler Luftdruck in einer Meßkammer auf den Faltenbalg, dessen Hubbewegung mittels einer an seiner Bodenplatte befestigten Schubstange aus der Meßkammer heraus auf einen Winkelhebel übertragen wird, dessen Drehbewegung bei der Verwendung von geraden, ebenen Skalen in eine Linearbewegung umgeformt werden muß. Dazu dient bekanntlich ein auf einer geraden Gleitschiene geführter Zeigerschlitten mit einem Stift, der in der gabelartig ausgebildeten Führung am Ende des längeren Arms des Winkelhebels gleitet. Um die bei der Umsetzung der Drehbewegung in eine geradlinige Bewegung auftretenden Fehler, insbesondere in den Endbereichen der Skala, möglichst klein zu halten, sind Maßnahmen bekannt, wie sie in der DE-OS 27 14 550 beschrieben sind.

Durch die dort verwendeten gabelartigen Führungen an beiden Enden des Winkelhebels, deren Gleitbahnen parallel zu den Längsachsen des jeweiligen Hebelarms verlaufen, läßt sich der Weg der beweglichen Stirnfläche des Faltenbalgs in den geradlinigen Weg des Zeigerschlittens abbilden.

Der proportionale Zusammenhang zwischen dem Meßdruck und der Hubbewegung des Faltenbalgs ist nur dann gegeben, wenn die wirksame Fläche des Faltenbalgs und seine Federcharakteristik unäbhängig von seinem Hub sind.

Dies trifft in der Praxis aus Gründen einer wirtschaftlichen Fertigung von derartigen Faltenbälgen häufig nicht zu. Je nach Balgtyp und Bauart läßt sich ein den nichtlinearen Zusammenhang zwischen Meßdruck und Anzeigeweg beschreibender mittlerer Fehrer angeben.

Es besteht somit die Aufgabe, die Auswirkung des mittleren Balgfehlers auf den Anzeigeweg relativ zur Skala möglichst zu verringern.

Eine Lösung dieser Aufgabe wird darin gesehen, daß bei einem pneumatischen Meßwerk der eingangs genannten Art der kürzere Hebelarm des Winkelhebels an einen an das Ende der Schubstange angelenkten und dieses auf einer Kreisabschnittsbahn führenden Lenkerhebel angekoppelt ist und daß der Faltenbalg so angeordnet ist, daß seine Mittelachse mindestens annähernd senkrecht zur Bewegungsrichtung des Zeigerschlittens verläuft.

Mit einfachen mechanischen Bauelementen läßt sich so eine ausreichende Korrektur des mittleren Balgfehlers bei kurzer Baulänge des Meßwerks erreichen. Die Länge des Lenkerhebels und die Lage seines Drehpunkts in bezug auf den Drehpunkt des Winkelhebels lassen sich empirisch bestimmen.

Neben dem bauartbedingten mittleren Balgfehler tritt bei jedem einzelnen Faltenbalg noch ein toleranzbedingter individueller Fehler auf, der sich mittels einer Weiterbildung des erfindungsgemäßen Winkelhebels ebenfalls beherrschen läßt. Dazu ist der Winkelhebel so auszubilden, daß seine Hebelarme zur Änderung des von ihnen angeschlossenen Winkels gegeneinander verstellbar sind.

Weitere Merkmale und Vorteile der Erfindung ergeben sich aus den im folgenden beschriebenen und in den Figuren dargestellten Ausführungsbeispielen in Verbindung mit den Unteransprüchen.

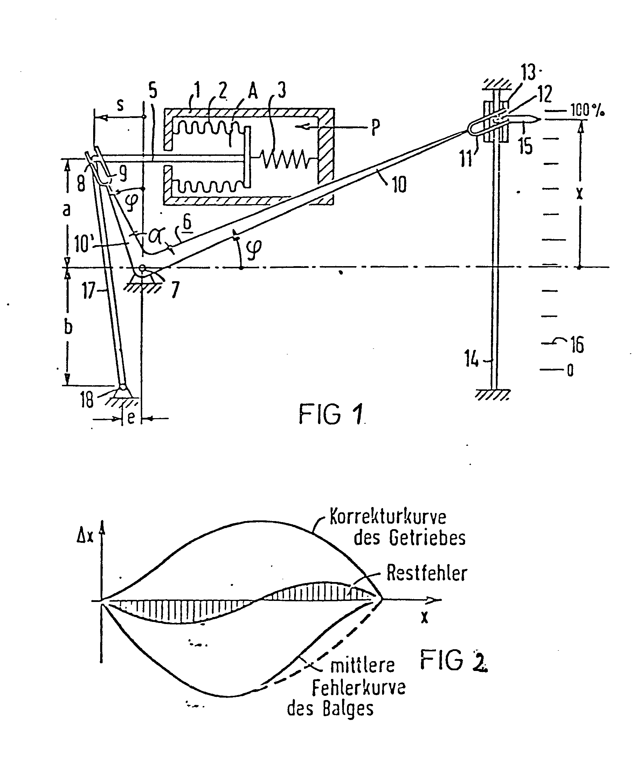

Figur 1 zeigt in schematischer Darstellung ein pneumatisches Zeigermeßwerk mit geradgeführtem Zeiger 15 und einer Meßkammer 1, in der koaxial zu deren vorzugsweise senkrecht zur Bewegungsrichtung des Zeigers 15 verlaufenden Längsachse ein Faltenbalg 2 mit relativ weicher Federkennung angeordnet und mittels der Feder 3 vorgespannt und geführt ist. Unter der Einwirkung des in die Meßkammer 1 eingeleiteten Meßdrucks p führt der Faltenbalg 2 eine druckproportionale Hubbewegung aus, die mit Hilfe einer an der Stirnfläche des Balgs befestigten Schubstange 5 nach außen übertragen wird.

Zur Anzeige des von der Schubstange zurückgelegten relativ kleinen Weges s ist ein mechanisches Übersetzungsgetriebe vorgesehen, das den Weg s vergrößert wiedergebende Anzeigemittel betätigt.

Das Getriebe besteht im wesentlichen aus einem Winkelhebel 6, der an seinem Scheitelpunkt in dem Lager 7 drehbar gelagert ist und der aus einem längeren Hebelarm 10 und einem kürzeren Hebelarm 10' besteht, die einen rechten Winkel einschließen.

Der längere Hebelarm 10 endet in einer gabelartigen Führung 11 für einen Stift 12, der Teil eines Zeigerschlittens 13 ist. Dieser läßt sich auf der Gleitschiene 14 parallel zu einer geraden, ebenen Skala 16 bewegen, wobei ein an ihm befestigter Zeiger 15 jeweils die den Weg s und somit den Meßwert abbildende Strecke x auf der Skala 16 anzeigt. Auf diese, an sich bekannte Weise wird die Winkelbewegung des längeren Hebelarms 10 über den Ausschlagwinkel in eine geradlinige Bewegung umgewandelt.

Das Ende des kürzeren Hebelarms 10' ist ebenfalls als gabelartige Führung 9 ausgebildet, im welcher ein an der Schubstange 5 senkrecht zu ihrer Längsachse angebrachter Stift 8 gleitet. Die Gleitbahnen beider gabelartiger Führungen 9 und 11 verlaufen parallel zu den Längsachsen der jeweiligen Hebelarme 10' und 10.

Der von der Schubstange 5 zurückgelegte Weg s ist dem Meßdruck p, der wirksamen Fläche des Faltenbalgs 2 und seiner Federsteife theoretisch proportional.

Da jedoch, wie bereits erwähnt, in der Praxis je nach Bauart weder die wirksame Balgfläche A, auf welche der Druck p wirkt, noch die Federkennung des Systems Federbalg 2-Feder 3 konstant ist, tritt eine sich über den Weg s und damit über die Skalenlänge ändernde Unproportionalität zwischen der Anzeige x und dem Meßdruck p auf, die als mittlerer Balgfehler bezeichnet wird.

Zur Verringerung dieses mittleren Balgfehlers wird das Ende der Schubstange 5 an einen Lenkerhebel 17 angelenkt, der in dem Lager 18 drehbar gelagert ist und das Ende der Schubstange 5 auf dem Abschnitt einer Kreisbahn führt, deren Radius sich aus den Strecken a und b zusammensetzt, wobei a der Abstand des Lagers 7 des Winkelhebels 6 von der Achse der Schubstange 5 und b der Abstand zwischen dem Lager 7 des Winkelhebels 6 und einer durch das Lager 18 des Lenkerhebels 17 gehenden, senkrecht zur Bewegungsrichtung des Zeigers 15 verlaufenden Geraden, wobei b > a gewählt wird. Die Länge a + b des Lenkerhebels 17 und der Anbringungsort seines Lagers 18 relativ zu dem des Lagers 7 des Winkelhebels 6 in den Abständen a und e ist annähernd berechenbar und wird dann empirisch ermittelt.

Bei der hier gezeigten Ausführung wirkt die gabelartige Geradführung 9 des kürzeren Hebelarms 10 mit einer stiftartigen Verlängerung 8 der Gelenkachse des die Schubstange 5 und den Lenkerhebel 17 verbindenden Gelenks zusammen.

In Figur 2 ist in einem Diagramm die mittlere Fehlerkurve des Balgs 2 und die durch entsprechende Wahl der Abstände b und e damit der Lage des Lagers 18 des Lenkerhebels 17 einstellbare Korrekturkurve des Getriebes dargestellt, wobei x der Weg Zeigerschlittens 13 über der Skala 16 und △ x die Abweichung des Wegs von dem Meßdruck p ist. Die mittlere Fehlerkurve des Balgs läßt sich mit Hilfe des Lenkerhebels bis auf einen kleinen Restfehler korrigieren.

Neben dem mittleren Balgfehler tritt häufig noch ein individueller Balgfehler auf, der von Balg zu Balg verschieden ist und eine streckenweise Verformung der mittleren Fehlerkurve des Balgs zur Folge hat, siehe gestrichelte Linie in Figur 2.

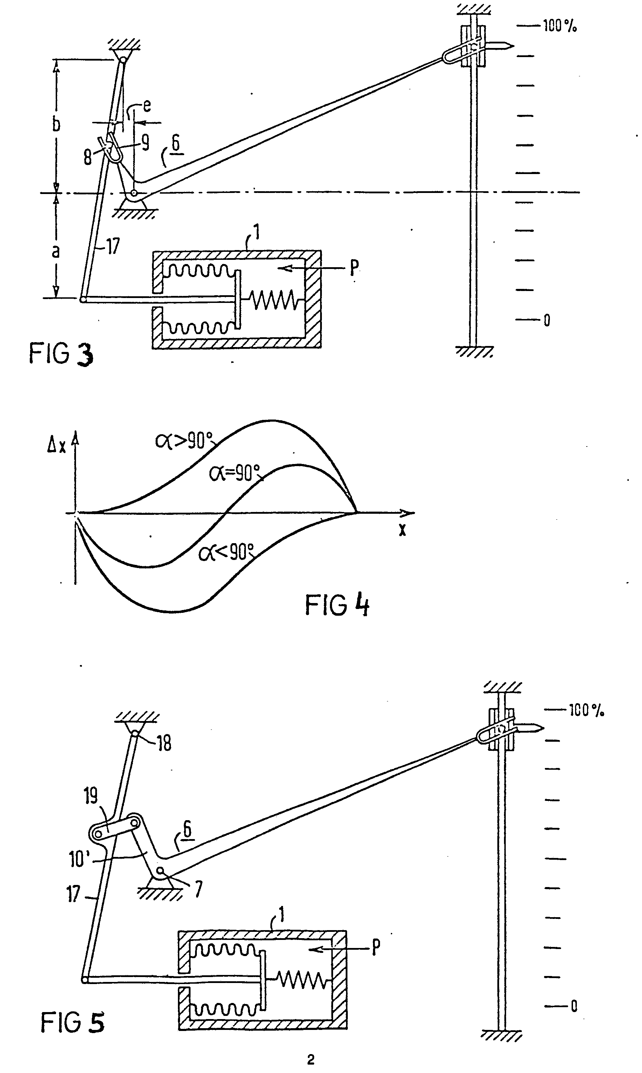

Um den nach der Korrektur mittels Kreisbahnführung des Schubstangenendes noch verbleibenden Restfehler und den individuellen Balgfehler weiter zu verringern, ist in einer Weiterbildung der Erfindung vorgesehen, den Scheitelwinkel α, den die Hebelarme 10 und 10' des Winkelhebels 6 einschließen, veränderlich zu machen. Dazu sind die Hebelarme 10 und 10' als selbstständige Hebel um den gemeinsamen Drehpunkt im Lager 7 drehbar und können mit Hilfe einer form- oder kraftschlüssigen Verbindung gegeneinander festgelegt werden. Wie in dem Diagramm in Figur 4 dargestellt ist, lassen sich die bei einem Scheitelwinkel von α = 90° auftretenden Abweichungen durch eine Vergrößerung oder Verkleinerung des Scheitelwinkels des Winkelhebels 6 in die eine oder andere Richtung verschieben, so daß damit ein weiterer Beitrag zur Korrektur der Balgfehler geleistet werden kann.

Werden in einem Meßgerät für Mehrfachanzeige mehrere Meßwerke der gezeigten Bauart benötigt, so läßt sich zur Raumersparnis neben einem Meßwerk nach Figur 1 ein nach den gleichen Prinzipien aufgebautes Meßwerk nach Figur 3 verwenden. Die Kopplung des Winkelhebels 6 mit dem Lenkerhebel 17 mittels Stift 8 und gabelartiger Führung 9 geschieht der anderen Lage der Meßkammer 1 entsprechend in einem durch das gewünschte Übertragungsverhältnis und die Fehlerkorrektur sich ergebenden Punkt auf den Lenkerhebel 17.

Zur Verringerung von Reibungsfehlern kann anstelle der gabelartigen Führung 9 am kürzeren Hebelarm 10' des Winkelhebels 6 ein Koppelglied 19 vorgesehen werden, wie in Figur 5 dargestellt ist. Das Koppelglied 19 ist einerseits am Ende des Hebelarms 10' des Winkelhebels 6, andererseits an einem Anlenkpunkt auf dem Lenker 17 angelenkt, so daß der Drehpunkt des Winkelhebels 6 im Lager 7, der Drehpunkt des Lenkerhebels 17 im Lager 18 und die beiden Anlenkpunkte des Koppelglieds 19 ein Koppelviereck bilden.

## Ansprüche

1. Pneumatisches Meßwerk mit einem meßdruckbeaufschlagten Faltenbalg, dessen Hub mittels einer Schubstange auf den kürzeren Arm eines an seinem Scheitel drehbeweglich gelagerten Winkelhebels übertragen wird, dessen längerer Arm an seinem Ende über eine gabelartige Führung an einen auf einer geraden Gleitschiene über eine gerade, ebene Skale bewegbaren Zeigerschlitten angekoppelt ist, dadurch gekennzeichnet, daß der kürzere Hebelarm (10') des Winkelhebels (6) an einen an das Ende der Schubstange (5) angelenkten und dieses auf einer Kreisabschnittsbahn führenden Lenkerhebel (17) angekoppelt ist und daß der Faltenbalg (2) so angeordnet ist, daß seine Mittelachse mindestens annähernd senkrecht zur Bewegungsrichtung des Zeigerschlittens (13) verläuft.

2. Pneumatisches Meßwerk nach Anspruch 1, dadurch gekennzeichnet, daß der kürzere Hebelarm (10') des Winkelhebels (6) in an sich bekannter Weise mit einer gabelartigen Führung (9) mit zur Hebellängsachse paralleler Gleitbahn versehen ist, die mit einem an dem Lenkerhebel (17) senkrecht zu dessen Schwenkebene angeordneten Stift (8) zusammenwirkt.

3. Pneumatisches Meßwerk nach Anspruch 1, dadurch gekennzeichnet, daß der kürzere Hebelarm (10') des Winkelhebels (6) über ein Koppelglied (19) an den Lenkerhebel (17) angekoppelt ist.

4. Pneumatisches Meßwerk nach Anspruch 1, dadurch gekennzeichnet, daß die Hebelarme (10, 10') des Winkelhebels (6) zur Änderung des von ihnen eingeschlossenen Winkels ($\alpha$) gegeneinander verstellbar sind.

## Claims

1. A pneumatic measuring device comprising a bellows subjected to a pressure, whose stroke is transferred via a thrust rod to a short arm of bellcrank lever pivoted at its junction to a long arm whose end is coupled by a forked guide, to a scale pointer movable on a straight slide bar along a straight, flat scale, characterised in that the short arm (10') of the bell-crank lever (6) is coupled to a control lever (17) that is linked to the end of the thrust rod (5) and guides said end on a segmental path, and the bellows (2) are so arranged that their centre axis is at least approximately perpendicular to the direction of motion of the scale pointer (13).

2. A pneumatic measuring device as claimed in claim 1, characterised in that the short arm (10') of the bell-crank lever (6) is provided in known manner with a forked guide (9) defining a slide path parallel to the longitudinal axis of the lever and engages a pin (8) arranged on the control lever (17) perpendicular to the swivel plane thereof.

3. A pneumatic measuring device as claimed in claim 1, characterised in that the short arm (10') of the bell-crank lever (6) is coupled to the control lever (17) by means of a coupling element (19).

4. A pneumatic measuring device as claimed in claim 1, characterised in that the arms (10, 10') of the bell-crank lever (6) can be adjusted with respect to each other to alter the angle ($\alpha$) formed between the arms.

## Revendications

1. Dispositif de mesure pneumatique comprenant un soufflet, soumis à une pression à mesurer, dont la course est transmise par une tige au bras le plus court d'un levier coudé monté tournant en son sommet, tandis que l'extrémité du bras le plus long est accouplée par une pièce de guidage en fourche à un coulisseau indicateur pouvant coulisser sur une glissière rectiligne le long d'une échelle graduée plane rectiligne, caractérisé en ce que le bras (10') le plus court du levier (6) coudé est accouplé à un levier (17) pivotant articulé à l'extrémité de la tige (5) et la guidant suivant un trajet en arc-de-cercle, et le soufflet est disposé de manière à ce que sa ligne médiane soit au moins sensiblement perpendiculaire à la direction de déplacement du coulisseau (13) indicateur.

2. Dispositif de mesure pneumatique selon la revendication 1, caractérisé en ce que le bras (10') le plus court du levier (6) coudé est muni, d'une manière en soi connue, d'une pièce (9) de guidage en fourche, dont le trajet de coulissement est parallèle à l'axe longitudinal du levier et qui coopère avec un doigt (8) monté sur le levier (17) pivotant perpendiculairement au plan de pivotement de celui-ci.

3. Dispositif de mesure pneumatique selon la revendication 1, caractérisé en ce que le bras (10') le plus court du levier (6) coudé est couplé au levier (17) pivotant par une biellette (19).

4. Dispositif de mesure pneumatique selon la revendication 1, caractérisé en ce que les bras 10, 10') du levier (6) coudé peuvent être réglés l'un par rapport à l'autre en vue de modifier l'angle ($\alpha$) qu'ils font entre eux.

0 011 871

FIG 1

Korrekturkurve
des Getriebes

Restfehler

mittlere
Fehlerkurve
des Balges

FIG 2

1

FIG 3

FIG 4

FIG 5